# EUROPEAN PATENT SPECIFICATION

(11) **EP 4 306 601 B1**
(45) Date of publication and mention of the grant of the patent: **01.04.2026**
(21) Application number: 22766849.8
(22) Date of filing: 24.02.2022
(51) Int. Cl.: C09D 11/17, B43K 8/00

(54) **OILY INK COMPOSITION**
ÖLIGE TINTENZUSAMMENSETZUNG
COMPOSITION D'ENCRE HUILEUSE

(30) Priority: 08.03.2021 JP 2021036669
(43) Date of publication of application: 17.01.2024
(73) Proprietor: Mitsubishi Pencil Company, Limited, Tokyo 140-8537 (JP)
(72) Inventor: IKAI, Takayuki, Tokyo 140-8537 (JP)
(74) Representative: Vossius & Partner Patentanwälte Rechtsanwälte mbB
(86) International application number: PCT/JP2022/007698
(87) International publication number: WO 2022/190890

(56) References cited:
- WO-A1-2020/105613
- JP-A- 2003 327 889
- JP-A- 2004 051 673
- JP-A- 2004 256 722
- JP-A- 2005 105 126
- JP-A- 2005 132 933
- JP-A- 2006 265 519
- JP-A- 2008 169 321
- JP-A- 2019 044 015
- JP-A- H1 121 494

## Description

### FIELD

The present invention relates to an oil-based (oily) ink composition.

### BACKGROUND

Conventionally, in the fields of drawing and the like, ink compositions containing an aluminum pigment are used for decorative purposes. Ink coated films obtained from such ink compositions can have an outer appearance with metallic gloss texture (metallic texture) and mirror-like excellent luster (mirror texture).

PTL 1 discloses an ethanol-based metallic color ink composition which contains an aluminum powder, ethanol, and an ethanol-soluble rosin-modified maleic acid resin.

PTL 2 discloses a bright ink composition for writing, which is characterized by containing a vapor-deposited aluminum flake powder having a thickness of 500 Å or less and an average particle size of 50 µm or less in an amount of 0.01 to 10% by weight with respect to an ink total amount.

In PTLs 3 to 6, it is also known to incorporate benzyl alcohol into an ink for the inhibition of whitening of an ink coated film.

Further, in the fields of drawing and the like, airbrushes which enable drawing and the like by scattering an ink in an atomized form and spraying the atomized ink to a piece of paper or the like are used. More specifically, various airbrushes have been proposed, to which a writing instrument is attached and which blow air to a pen tip of the writing instrument to scatter an ink seeped to the pen tip into an atomized form and spray the atomized ink to a piece of paper or the like, thereby enabling drawing and the like.

PTL 7 discloses an airbrush unit which includes an airbrush and a writing instrument and sprays a water-based ink composition by way of air blown from the airbrush, and in which the writing instrument contains the water-based ink composition that contains a concealing pigment and has a shear thinning index value of 0.4 to 0.8 at a shear rate of 9.6 to 76.6/s. Additionally, JP 2004051673 might be cited as prior art.

### [CITATION LIST]

### [PATENT LITERATURE]

[PTL 1] JP H4-342775
[PTL 2] JP 2004-51673
[PTL 3] JP S61-14271
[PTL 4] JP 2006-308664
[PTL 5] JP 3864115
[PTL 6] JP 4118093
[PTL 7] JP 2019-189671

### SUMMARY

### [TECHNICAL PROBLEM]

The present invention provides a novel oil-based ink composition which can yield a coated film having excellent mirror texture.

### [SOLUTION TO PROBLEM]

Extensive studies carried out by the present inventors led to the discovery that the above-described problem can be solved by the following means, thereby realizing the present invention. In other words, the present invention encompasses the following:
<Mode 1> An oil-based ink composition, containing: propylene glycol monomethyl ether; a resin; a hydroxy acid ester having a boiling point of 150°C or higher; an auxiliary solvent (cosolvent); and a leafing-type vapor-deposited aluminum pigment,
   wherein the auxiliary solvent can dissolve the resin and has a higher boiling point than the hydroxy acid ester.
<Mode 2> The oil-based ink composition according to Mode 1, wherein the hydroxy acid ester is a lactic acid ester.
<Mode 3> The oil-based ink composition according to Mode 2, wherein the lactic acid ester is ethyl lactate.
<Mode 4> The oil-based ink composition according to any one of Modes 1 to 3, further containing an alcohol having a boiling point of lower than 100°C.
<Mode 5> The oil-based ink composition according to any one of Modes 1 to 4, wherein the resin is at least one selected from the group consisting of rosin and ketone resins.
<Mode 6> The oil-based ink composition according to any one of Modes 1 to 5, wherein the auxiliary solvent is benzyl alcohol.
<Mode 7> A writing instrument, in which the oil-based ink composition according to any one of Modes 1 to 6 is filled.
<Mode 8> An airbrush unit, including: the writing instrument according to Mode 7; and an airbrush,
wherein the airbrush unit can scatter the oil-based ink composition of the writing instrument by way of air blown from the airbrush.

### [ADVANTAGEIOUS EFFECTS OF INVENTION]

According to the present invention, a novel oil-based ink composition which can yield a coated film having excellent mirror texture can be provided.

### BRIEF DESCRIPTION OF DRAWING

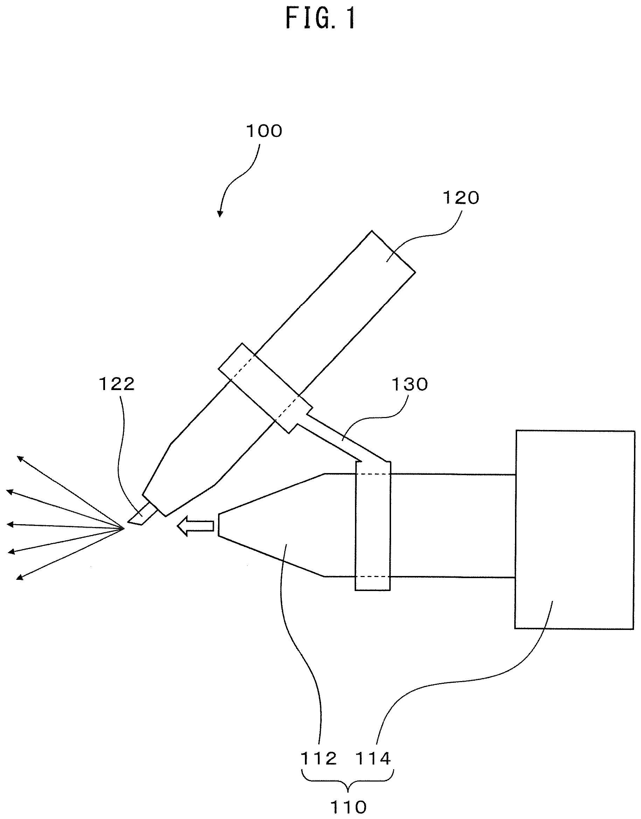

FIG. 1 is a schematic drawing of an airbrush unit combined with a marking pen.

### DESCRIPTION OF EMBODIMENTS

### <<Oil-Based Ink Composition>>

The oil-based ink composition of the present invention is an oil-based ink composition containing: propylene glycol monomethyl ether; a resin; a hydroxy acid ester having a boiling point of 150°C or higher; an auxiliary solvent; and a leafing-type vapor-deposited aluminum pigment, wherein the auxiliary agent can dissolve the resin and has a higher boiling point than the hydroxy acid ester.

Conventionally, in an ink containing a leafing-type vapor-deposited aluminum pigment, propylene glycol monomethyl ether (PGM) and benzyl alcohol are generally used in combination with a resin as a solvent for dissolving the resin and a drying retardant, respectively. In this mode, however, there are cases where the ink absorbs the moisture in the atmosphere during drying and this moisture is dispersed in the organic solvent of the ink, causing precipitation (insolubilization) of the resin in the ink and consequently deteriorating the mirror texture. There are also cases where, depending on the humidity, the amount of the moisture absorbed by the ink is increased and water is hardly volatilized, which makes the precipitation of the resin more likely to occur.

In this respect, the present inventors discovered that a coated film having excellent mirror texture can be obtained by using a hydrophilic hydroxy acid ester whose boiling point is 150°C or higher but lower than that of an auxiliary solvent. Specifically, such a hydroxy acid ester exhibits its affinity to the water remaining in the ink after volatilization of PGM, as a result of which the precipitation of the resin can be inhibited.

Further, since the above-described auxiliary solvent is a substance that has a low volatility and dissolves the resin, it remains even after volatilization of PGM and dissolves the resin. According to these features, water is gradually volatilized before the auxiliary solvent is volatilized, and the ink is thus dried in the absence of water; therefore, precipitation of the resin is inhibited, and as a result, superior mirror texture can be obtained.

The oil-based ink composition of the present invention preferably further contains an alcohol having a boiling point of lower than 100°C. Such an alcohol having a lower boiling point than water can further reduce the water content of the ink through volatilization of water, along with volatilization of the alcohol itself. As a result, the precipitation of the resin can be further inhibited, so that superior mirror texture can be obtained.

Constituents of the present invention will now be described.

### <Propylene Glycol Monomethyl Ether>

As propylene glycol monomethyl ether (PGM), a commercially available PGM can be used.

The content ratio of propylene glycol monomethyl ether may be 40 mass% or more, 45 mass% or more, 50 mass% or more, 55 mass% or more, or 60 mass% or more, and may be 95 mass% or less, 90 mass% or less, 85 mass% or less, 80 mass% or less, 75 mass% or less, 70 mass% or less, or 65 mass% or less.

### <Resin>

As the resin, the following can be used: polar resins, such as a ketone resin, a maleic acid resin, a terpene resin, a terpene phenol resin, an ester gum, an alkyd resin, a phenol resin, rosin, a polyvinylpyrrolidone, a polyvinyl butyral, a polyvinyl alcohol, and an acrylic resin; non-polar resins, such as a melamine resin, a xylene resin, a sulfonamide resin, a nitrocellulose resin, and a urea resin; and derivatives of these resins. These resins may be used singly or in combination.

Among the above-described resins, it is preferred to use polar resins, particularly a ketone resin and rosin, especially when the oil-based ink composition of the present invention contains an alcohol having a boiling point of lower than 100°C. These resins readily dissolve the alcohol because of their polarity, so that they are unlikely to be affected by water, i.e. unlikely to precipitate even in the presence of water. As a result, excellent mirror texture can be obtained, even when a trace amount of water remains in the ink.

From the standpoint of obtaining sufficient fixation, the content ratio of the resin in the oil-based ink composition of the present invention is preferably 1 mass% or more, 2 mass% or more, 3 mass% or more, or 5 mass% or more. From the standpoint of inhibiting an excessive increase in the ink viscosity and consequently preventing deterioration of the writing performance and the dischargeability from an airbrush, the content ratio of the resin is preferably 50 mass% or less, 45 mass% or less, 40 mass% or less, 35 mass% or less, 30 mass% or less, 25 mass% or less, 20 mass% or less, 15 mass% or less, 10 mass% or less, or 7 mass% or less.

### <Hydroxy Acid Ester>

As the hydroxy acid ester, one whose boiling point is 150°C or higher and lower than that of the auxiliary solvent can be used. The boiling point may be 190°C or lower, 180°C or lower, 170°C or lower, or 160°C or lower. Such a hydroxy acid ester, because of its lower boiling point than that of the auxiliary solvent, is volatilized faster than the auxiliary solvent when the ink is dried. Since the hydroxy acid ester has a higher boiling point than water and is thus volatilized after water, the remaining water can be removed from the ink.

As the hydroxy acid ester, for example, a glycolic acid ester, a lactic acid ester, a tartronic acid ester, a glyceric acid ester, or a hydroxybutyric acid ester can be used. Thereamong, it is preferred to use a lactic acid ester from the standpoint of mirror texture.

The lactic acid ester is not particularly limited, as long as it has a lower boiling point than the auxiliary solvent. Examples of such a lactic acid ester that can be used include ethyl lactate (boiling point: 154°C), propyl lactate (boiling point: 169°C), butyl lactate (boiling point: 170°C), pentyl lactate (boiling point: 226°C), and hexyl lactate (boiling point: 245°C). Thereamong, it is preferred to use ethyl lactate from the standpoint of mirror texture.

From the standpoint of improving mirror texture, the content ratio of the hydroxy acid ester is preferably 0.1 mass% or more, 0.2 mass% or more, 0.3 mass% or more, 0.5 mass% or more, 0.7 mass% or more, 1 mass% or more, 3 mass% or more, or 4 mass% or more. This content ratio may be 25 mass% or less, 20 mass% or less, 15 mass% or less, 10 mass% or less, 7 mass% or less, or 5 mass% or less.

### <Auxiliary Solvent>

As the auxiliary solvent, a solvent that is capable of dissolving the above-described resin and has a higher boiling point than the above-described hydroxy acid ester can be used. The phrase "capable of dissolving the resin" used herein means that the amount of the resin which can be dissolved in 100 ml of the auxiliary solvent is, for example, 5 g or more, 10 g or more, 15 g or more, 20 g or more, 30 g or more, 40 g or more, 50 g or more, 70 g or more, 80 g or more, or 100 g or more.

Such an auxiliary solvent is also generally used as a drying retardant in some cases. The presence of the auxiliary solvent inhibits whitening of a coated film, whereby the mirror texture can be improved.

Examples of such a solvent that can be used include 3-methoxy-1-butanol (boiling point: 158°C), 3-methoxy-3-methyl-1-butanol (boiling point: 174°C), benzyl alcohol (boiling point: 205°C), phenylpropylene glycol (boiling point: 243°C), diethylene glycol monophenyl ether (boiling point: 245°C), 2-phenoxyethanol (boiling point: 247°C), and benzyl glycol (boiling point: 256°C). These solvents may each be a commercially available product.

In the oil-based ink composition of the present invention, from the standpoint of improving mirror texture, the content ratio of the auxiliary solvent is preferably 0.1 mass% or more, 0.2 mass% or more, 0.3 mass% or more, 0.5 mass% or more, 0.7 mass% or more, 1 mass% or more, 3 mass% or more, or 4 mass% or more. This content ratio may be 25 mass% or less, 20 mass% or less, 15 mass% or less, 10 mass% or less, 7 mass% or less, or 5 mass% or less.

A difference in boiling point between the auxiliary solvent and the hydroxy acid ester may be 10°C or greater, 20°C or greater, 30°C or greater, 40°C or greater, or 50°C or greater, and may be 150°C or less, 130°C or less, 110°C or less, 100°C or less, 90°C or less, 80°C or less, 70°C or less, or 60°C or less.

### <Aluminum Pigment>

The aluminum pigment is a leafing-type vapor-deposited aluminum pigment. The term "leafing-type aluminum pigment" used herein means an aluminum pigment that is arrayed on the surface layer of an ink film after being applied. Further, the term "vapor-deposited aluminum pigment" used herein refers to an aluminum pigment generally having a thickness of 100 nm or less, which can be obtained by vapor-depositing aluminum on a plastic film or the like, peeling off the thus vapor-deposited aluminum from the plastic film, and then pulverizing the resulting aluminum thin film. The thickness may be 5 µm or more, 10 µm or more, 15 µm or more, 20 µm or more, or 25 µm or more, but may be 90 µm or less, 80 µm or less, 70 µm or less, 60 µm or less, 50 µm or less, 40 µm or less, or 35 µm or less.

It is noted here that this thickness is an average thickness also referred to as "h50", which is a value at which 50% of a metal pigment has a specified thickness or less in a cumulative frequency distribution also referred to as "cumulative undersize curve". This average thickness can be determined using, for example, a scanning electron microscope.

As the aluminum pigment, an aluminum pigment that is commercially available as a leafing-type "vapor-deposited aluminum pigment" can be used as appropriate.

The average particle size of the aluminum pigment may be 100 nm or more, 200 nm or more, 300 nm or more, 500 nm or more, 700 nm or more, 1 µm or more, 2 µm or more, 3 µm or more, 5 µm or more, 7 µm or more, or 10 µm or more, but may be 30 µm or less, 25 µm or less, 20 µm or less, 15 µm or less, 10 µm or less, or 7 µm or less. The average particle size adopted herein is selected as appropriate in accordance with the size of the aluminum pigment of interest. In the case of particles generally having a size of less than 1 µm, the average particle size is a histogram average particle size (D50) based on a scattering intensity distribution measured by a dynamic light scattering method, while in the case of particles generally having a size of 1 µm or more, the average particle size is a median diameter (D50) calculated based on volume by a laser diffraction method. The measurement by a dynamic light scattering method can be performed using, for example, DelsaMax CORE (manufactured by Beckman Coulter, Inc.). The measurement by a laser diffraction method can be performed using, for example, a particle size distribution analyzer MT3300II (manufactured by MicrotracBEL Corp.).

As a commercially available aluminum pigment for oil-based inks, one in the form of being dispersed in a solvent can be used. The solvent may be the above-described propylene glycol monomethyl ether, alcohol having a boiling point of lower than 100°C, or auxiliary solvent, or may be a solvent commonly used in paints, such as mineral spirits, toluene, xylene, or solvent naphtha.

In the oil-based ink composition of the present invention, from the standpoint of generating favorable metallic luster, the content ratio of the solid component of the aluminum pigment is preferably 0.1 mass% or more, 0.2 mass% or more, 0.3 mass% or more, 0.5 mass% or more, 0.7 mass% or more, 1 mass% or more, or 3 mass% or more and, from the standpoint of preventing the oil-based ink from clogging the inside of a writing portion of a writing instrument as well as from the standpoint of reducing the irregularities of the resulting coated film and thereby improving the mirror texture, the content ratio of the solid component of the aluminum pigment is preferably 10 mass% or less, 7 mass% or less, 5 mass% or less, 3 mass% or less, 1 mass% or less, or 0.5 mass% or less.

### <Alcohol>

The alcohol is one having a boiling point of lower than 100°C. This boiling point may be 90°C or lower, 88°C or lower, 85°C or lower, or 83°C or lower, but may be 60°C or higher, 70°C or higher, or 75°C or higher.

Examples of such an alcohol that can be used include methanol (boiling point: 64.7°C), ethanol (boiling point: 78.4°C), isopropyl alcohol (boiling point: 82.5°C), propyl alcohol (boiling point: 97 to 98°C), *sec*-butanol (boiling point: 99°C), and t-butanol (boiling point: 82.4°C) and, thereamong, it is preferred to use ethanol or isopropyl alcohol. When any of these alcohols is used, because of its low boiling point, not only the drying performance of drawn lines, but also the mirror texture can be improved.

In the oil-based ink composition of the present invention, from the standpoint of obtaining sufficient fixation, the content ratio of the alcohol is preferably 1 mass% or more, 2 mass% or more, 3 mass% or more, 5 mass% or more, or 7 mass% or more and, from the standpoint of inhibiting an excessive increase in the ink viscosity and consequently preventing deterioration of the writing performance and the dischargeability from an airbrush, the content ratio of the alcohol is preferably 50 mass% or less, 45 mass% or less, 40 mass% or less, 35 mass% or less, 30 mass% or less, 25 mass% or less, 20 mass% or less, 15 mass% or less, or 10 mass% or less.

### <Other Components>

The oil-based ink may further contain various additives, such as an antioxidant, a fixative, and a non-drying agent. As the antioxidant, for example, tocopherol acetate can be used.

### <<Writing Instrument>>

The writing instrument contains an oil-based ink, and may include an ink reservoir, a writing portion, and a holding portion, in which case, the oil-based ink is stored in the ink reservoir.

The writing instrument may be a marking pen. The term "marking pen" used herein means a pen having a mechanism for supplying an ink stored in an ink reservoir to a resin-made writing portion by means of capillary action, and encompasses those pens that are referred to as "felt-tip pens" by those skilled in the art.

In particular, from the standpoint of obtaining favorable ink outflow characteristics, the writing instrument of the present invention is preferably a valve-type marking pen which further includes a valve between the ink reservoir and the writing portion.

### <<Airbrush Unit>>

The airbrush unit of the present invention includes the above-described writing instrument and an airbrush, and can scatter the above-described oil-based ink composition of the writing instrument by way of air blown from the airbrush.

An airbrush unit 100 in which a writing instrument is attached to an airbrush may include an optional connecting member 130 which connects an airbrush 110 and a writing instrument 120.

The airbrush unit 100 can scatter an ink adhering to a writing portion 122 such that the ink is spread from the writing portion 122 as illustrated by five arrows in FIG. 1 by, for example, spraying air in the direction from a nozzle 112 toward the writing portion 122 of the writing instrument 120 as illustrated by an outline arrow in FIG. 1.

### <Airbrush>

As illustrated in FIG. 1, the airbrush 110 may include the nozzle 112 and a gas supply member 114. The nozzle 112 and the gas supply member 114 may be formed integrally, or may be connected to each other via a hollow member such as a hose.

The nozzle is not particularly limited, as long as it is a nozzle from which a high-pressure gas can be sprayed to the writing portion of the writing instrument.

The gas supply member is also not particularly limited, as long as it is a member capable of supplying a high-pressure gas to the nozzle. The gas supply member is constituted by: a member for spraying air blown thereinto from a human mouth, a member formed of an elastic portion of a blower pump that is compressed and deformed by hand to generate a high-pressure gas, a member of a pump constituted by a piston and a cylinder, which piston is reciprocally moved by hand, a member using a spray can filled with a liquefied gas, or a member that electrically generates a compressed air, such as a motor; and a high-pressure gas generator such as a diaphragm connected with a motor via a mechanism that converts rotary motion into reciprocating motion, and the gas supply member may be a member that sends a high-pressure gas from a high-pressure gas generator to a spray nozzle.

### <Connecting Member>

The connecting member is an optional member that connects the airbrush and the writing instrument. The connecting member is not particularly limited, as long as it is a member that physically connects the airbrush and the writing instrument.

### EXAMPLES

The present invention will now be described concretely by way of Examples and Comparative Examples; however, the present invention is not limited thereto.

### <<Production of Inks>>

### <Example 1>

An oil-based ink of Example 1 was produced in an amount of 100 mass parts using 1.2 mass parts of a leafing-type vapor-deposited aluminum pigment (average particle size: 12 µm, average thickness: 30 nm), 20 mass parts of a ketone resin (KETON RESIN K90, manufactured by Arakawa Chemical Industries, Ltd.), 3.0 mass parts of ethyl lactate (boiling point: 154°C) as a hydroxy acid ester, 10.0 mass partsmass parts of ethanol (boiling point: 78.4°C), 5.0 mass partsmass parts of benzyl alcohol (boiling point: 205°C) as an auxiliary solvent, 0.5 mass partsmass parts of tocopherol acetate (RIKEN E ACETATE 960, manufactured by Riken Vitamin Co., Ltd.), and 60.3 mass partsmass parts of propylene glycol monomethyl ether (PGM, DOWANOL PM) as an organic solvent.

### <Examples 2 to 9 and Comparative Examples 1 to 8>

Oil-based ink compositions of Examples 2 to 9 and Comparative Examples 1 to 8 were produced in the same manner as in Example 1, except that the type and the content ratio of each component were changed as shown in Tables 1 to 3.

The details of other constituents shown in Table 1 are as follows:
Leafing-type scaly aluminum pigment: 0870MS (manufactured by Toyo Aluminium K.K., solid content:70%, average particle size: 10 µm)
Rosin: PINECRYSTAL KE-604 (manufactured by Arakawa Chemical Industries, Ltd.)

### <<Evaluation of Mirror Texture>>

The above-produced oil-based ink composition of Example 1 was filled into an ink reservoir of a valve-type marking pen (PC-3M, manufactured by Mitsubishi Pencil Co., Ltd.). Using this marking pen, a line was drawn on a polystyrene plastic plate in an environment having a temperature of 25°C and a humidity of 70%. The outer appearance of the thus drawn line (coated film) was visually evaluated.

The oil-based ink compositions of Examples 2 to 9 and Comparative Examples 1 to 8 were also evaluated in the same manner.

The evaluation criteria were as follows:
A: A coated film exhibited a strong mirror texture.
B: A coated film exhibited a mirror texture.
C: A coated film was slightly dull, exhibiting a weak mirror texture.
D: A coated film was notably dull, exhibiting a very weak mirror texture.
E: A coated film did not have a mirror texture.

The constitutions and evaluation results of Examples and Comparative Examples are shown in Tables 1 to 3.

### [Table 1]

**Table 1**

| | | | Example 1 | Example 2 | Example 3 | Comparative Example 1 | Comparative Example 2 |
|---|---|---|---|---|---|---|---|
| Constituents (mass%) | Aluminum pigment | leafing, vapor-deposited | 1.2 | 1.2 | 1.2 | 1.2 | 1.2 |
| | | leafing, scaly | 0.0 | 0.0 | 0.0 | 0.0 | 0.0 |
| | Resin | rosin | 0.0 | 0.0 | 0.0 | 0.0 | 0.0 |
| | | ketone resin | 20.0 | 20.0 | 20.0 | 20.0 | 20.0 |
| | | nitrocellulose | 0.0 | 0.0 | 0.0 | 0.0 | 0.0 |
| | Hydroxy acid ester | ethyl lactate (boiling point: 154°C) | 3.0 | 3.0 | 3.0 | 0.0 | 0.0 |
| | | methyl lactate (boiling point: 144°C) | 0.0 | 0.0 | 0.0 | 0.0 | 0.0 |
| | PGM | | 60.3 | 65.3 | 70.3 | 63.3 | 68.3 |
| | Alcohol | ethanol | 10.0 | 10.0 | 0.0 | 10.0 | 10.0 |
| | | isopropyl alcohol | 0.0 | 0.0 | 0.0 | 0.0 | 0.0 |
| | Auxiliary solvent | benzyl alcohol (boiling point: 205°C) | 5.0 | 0.0 | 5.0 | 5.0 | 0.0 |
| | | 2-phenoxyethanol (boiling point: 247°C) | 0.0 | 0.0 | 0.0 | 0.0 | 0.0 |
| | tocopherol acetate | | 0.5 | 0.5 | 0.5 | 0.5 | 0.5 |
| | Total | | 100.0 | 100.0 | 100.0 | 100.0 | 100.0 |
| Difference in boiling point between auxiliary solvent and hydroxy acid ester (°C) | | | 51.0 | - | 51.0 | - | - |
| Evaluation results | Mirror texture of coated film | | A | B | B | C | C |

### [Table 2]

**Table 2**

| | | | Example 4 | Example 5 | Comparative Example 3 |
|---|---|---|---|---|---|
| Constituents (mass%) | Aluminum pigment | leafing, vapor-deposited | 1.2 | 1.2 | 1.2 |
| | | leafing, scaly | 0.0 | 0.0 | 0.0 |
| | Resin | Rosin | 20.0 | 20.0 | 20.0 |
| | | ketone resin | 0.0 | 0.0 | 0.0 |
| | | Nitrocellulose | 0.0 | 0.0 | 0.0 |
| | Hydroxy acid ester | ethyl lactate (boiling point: 154°C) | 3.0 | 3.0 | 0.0 |
| | | methyl lactate (boiling point: 144°C) | 0.0 | 0.0 | 0.0 |
| | PGM | | 60.3 | 70.3 | 63.3 |
| | Alcohol | ethanol | 10.0 | 0.0 | 10.0 |
| | | isopropyl alcohol | 0.0 | 0.0 | 0.0 |
| | Auxiliary solvent | benzyl alcohol (boiling point: 205°C) | 5.0 | 5.0 | 5.0 |
| | | 2-phenoxyethanol (boiling point: 247°C) | 0.0 | 0.0 | 0.0 |
| | tocopherol acetate | | 0.5 | 0.5 | 0.5 |
| | Total | | 100.0 | 100.0 | 100.0 |
| Difference in boiling point between auxiliary solvent and hydroxy acid ester (°C) | | | 51.0 | 51.0 | - |
| Evaluation results | Mirror texture of coated film | | A | B | C |

### [Table 3]

**Table 3**

| | | | Example 6 | Example 7 | Example 8 | Example 9 | Comparative Example 4 | Comparative Example 5 | Comparative Example 6 | Comparative Example 7 | Comparative Example 8 |
|---|---|---|---|---|---|---|---|---|---|---|---|
| Constituents (mass%) | Aluminum pigment | leafing, vapor-deposited | 1.2 | 1.2 | 1.2 | 1.2 | 1.2 | 0.0 | 0.0 | 1.2 | 1.2 |
| | | leafing, scaly | 0.0 | 0.0 | 0.0 | 0.0 | 0.0 | 10.0 | 10.0 | 0.0 | 0.0 |
| | Resin | rosin | 0.0 | 0.0 | 0.0 | 0.0 | 0.0 | 0.0 | 0.0 | 0.0 | 0.0 |
| | | ketone resin | 0.0 | 0.0 | 0.0 | 0.0 | 0.0 | 0.0 | 0.0 | 0.0 | 0.0 |
| | | nitrocellulose | 3.0 | 3.0 | 3.0 | 3.0 | 3.0 | 4.5 | 4.5 | 3.0 | 3.0 |
| | Hydroxy acid ester | ethyl lactate (boiling point: 154°C) | 5.0 | 5.0 | 0.0 | 0.0 | 0.0 | 0.0 | 3.0 | 5.0 | 0.0 |
| | | propyl lactate (boiling point: 169°C) | 0.0 | 0.0 | 5.0 | 0.0 | 0.0 | 0.0 | 0.0 | 0.0 | 0.0 |
| | | butyl lactate (boiling point: 170°C) | 0.0 | 0.0 | 0.0 | 5.0 | 0.0 | 0.0 | 0.0 | 0.0 | 0.0 |
| | | methyl lactate (boiling point: 144°C) | 0.0 | 0.0 | 0.0 | 0.0 | 0.0 | 0.0 | 0.0 | 0.0 | 5.0 |
| | PGM | | 73.8 | 73.8 | 73.8 | 73.8 | 78.8 | 57.8 | 54.7 | 78.8 | 73.8 |
| | Alcohol | ethanol | 10.0 | 10.0 | 10.0 | 10.0 | 10.0 | 20.0 | 20.0 | 10.0 | 10.0 |
| | | isopropyl alcohol | 1.5 | 1.5 | 1.5 | 1.5 | 1.5 | 2.3 | 2.3 | 1.5 | 1.5 |
| | Auxiliary solvent | benzyl alcohol (boiling point: 205°C) | 5.0 | 0.0 | 5.0 | 5.0 | 5.0 | 5.0 | 5.0 | 0.0 | 5.0 |
| | | 2-phenoxyethanol (boiling point: 247°C) | 0.0 | 5.0 | 0.0 | 0.0 | 0.0 | 0.0 | 0.0 | 0.0 | 0.0 |
| | tocopherol acetate | | 0.5 | 0.5 | 0.5 | 0.5 | 0.5 | 0.5 | 0.5 | 0.5 | 0.5 |
| | Total | | 100.0 | 100.0 | 100.0 | 100.0 | 100.0 | 100.0 | 100.0 | 100.0 | 100.0 |
| Difference in boiling point between auxiliary solvent and hydroxy acid ester (°C) | | | 51.0 | 93.0 | 51.0 | 51.0 | - | - | 51.0 | - | 61.0 |
| Evaluation results | Mirror texture of coated film | | B | C | B | B | D | E | E | E | D |

From Tables 1 to 3, it can be understood that the oil-based ink composition of Example 1, which contained a resin, a hydroxy acid ester having a boiling point of 150°C or higher, an auxiliary solvent, and a leafing-type vapor-deposited aluminum pigment, yielded a favorable mirror texture. In particular, the oil-based ink compositions of Examples 1 and 4, in which ethanol was further incorporated and rosin or a ketone resin was used as a polar resin, yielded an especially favorable mirror texture.

### REFERENCE SIGNS LIST

100: airbrush unit
110: airbrush
112: nozzle
114: gas supply member
120: writing instrument
122: writing portion
130: connecting member

## Claims

1. An oil-based ink composition, containing: propylene glycol monomethyl ether; a resin; a hydroxy acid ester having a boiling point of 150°C or higher; an auxiliary solvent; and a leafing-type vapor-deposited aluminum pigment,
wherein the auxiliary solvent can dissolve the resin and has a higher boiling point than the hydroxy acid ester.

2. The oil-based ink composition according to Claim 1, wherein the hydroxy acid ester is a lactic acid ester.

3. The oil-based ink composition according to Claim 2, wherein the lactic acid ester is ethyl lactate.

4. The oil-based ink composition according to any one of Claims 1 to 3, further containing an alcohol having a boiling point of lower than 100°C.

5. The oil-based ink composition according to any one of Claims 1 to 4, wherein the resin is at least one selected from the group consisting of rosin and ketone resins.

6. The oil-based ink composition according to any one of Claims 1 to 5, wherein the auxiliary solvent is benzyl alcohol.

7. A writing instrument, in which the oil-based ink composition according to any one of Claims 1 to 6 is filled.

8. An airbrush unit, including: the writing instrument according to Claim 7; and an airbrush,
wherein the airbrush unit can scatter the oil-based ink composition of the writing instrument by way of air blown from the airbrush.

## Patentansprüche

1. Eine Tintenzusammensetzung auf Ölbasis, enthaltend: Propylenglykolmonomethylether; ein Harz; einen Hydroxysäureester mit einem Siedepunkt von 150°C oder höher; ein Hilfslösungsmittel; und ein blättriges, aufgedampftes Aluminiumpigment, wobei das Hilfslösungsmittel das Harz lösen kann und einen höheren Siedepunkt als der Hydroxysäureester aufweist.

2. Die Tintenzusammensetzung auf Ölbasis nach Anspruch 1, wobei der Hydroxysäureester ein Milchsäureester ist.

3. Die Tintenzusammensetzung auf Ölbasis nach Anspruch 2, wobei der Milchsäureester Ethyllactat ist.

4. Die Tintenzusammensetzung auf Ölbasis nach einem der Ansprüche 1 bis 3, ferner enthaltend einen Alkohol mit einem Siedepunkt von unter 100°C.

5. Die Tintenzusammensetzung auf Ölbasis nach einem der Ansprüche 1 bis 4, wobei das Harz mindestens eines, ausgewählt aus der Gruppe bestehend aus Kolophonium und Ketonharzen, ist.

6. Die Tintenzusammensetzung auf Ölbasis nach einem der Ansprüche 1 bis 5, wobei das Hilfslösungsmittel Benzylalkohol ist.

7. Ein Schreibgerät, in das die Tintenzusammensetzung auf Ölbasis nach einem der Ansprüche 1 bis 6 gefüllt ist.

8. Eine Airbrush-Einheit, beinhaltend: das Schreibgerät nach Anspruch 7; und eine Airbrush,
wobei die Airbrush-Einheit die Tintenzusammensetzung auf Ölbasis des Schreibgeräts mittels aus der Airbrush geblasener Luft versprühen kann.

## Revendications

1. Composition d'encre huileuse contenant : de l'éther monométhylique de propylèneglycol ; une résine ; un ester d'hydroxyacide ayant un point d'ébullition de 150°C ou plus ; un solvant auxiliaire ; et un pigment d'aluminium déposé en phase vapeur du type feuillant,
dans laquelle le solvant auxiliaire peut dissoudre la résine et a un point d'ébullition supérieur à celui de l'ester d'hydroxyacide.

2. Composition d'encre huileuse selon la revendication 1, dans laquelle l'ester d'hydroxyacide est un ester d'acide lactique.

3. Composition d'encre huileuse selon la revendication 2, dans laquelle l'ester d'acide lactique est le lactate d'éthyle.

4. Composition d'encre huileuse selon l'une quelconque des revendications 1 à 3, contenant en outre un alcool ayant un point d'ébullition inférieur à 100°C.

5. Composition d'encre huileuse selon l'une quelconque des revendications 1 à 4, dans laquelle la résine est au moins l'une choisie dans le groupe constitué par les résines de colophane et de cétone.

6. Composition d'encre huileuse selon l'une quelconque des revendications 1 à 5, dans laquelle le solvant auxiliaire est l'alcool benzylique.

7. Instrument d'écriture rempli de la composition d'encre huileuse de l'une quelconque des revendications 1 à 6.

8. Unité d'aérographe contenant : l'instrument d'écriture de la revendication 7 ; et un aérographe,
laquelle unité d'aérographe peut disperser la composition d'encre huileuse de l'instrument d'écriture au moyen d'air soufflé depuis l'aérographe.
